# EUROPÄISCHE PATENTSCHRIFT

(11) **EP 2 869 450 B1**
(45) Veröffentlichungstag und Bekanntmachung des Hinweises auf die Patenterteilung: **18.08.2021**
(21) Anmeldenummer: 13190942.6
(22) Anmeldetag: 30.10.2013
(51) Int. Cl.: H02M 5/257, H02J 3/14, H02M 5/293

(54) **Verfahren und Vorrichtung zum Festlegen der Einschaltzeitpunkte von parallel geschalteten Leistungsstellern**
Process and device for the switch-on times of parallel circuit output adjusters
Procédé et dispositif permettant de déterminer les moments d'activation de régulateurs de puissance connectés en parallèle

(43) Veröffentlichungstag der Anmeldung: 06.05.2015
(73) Patentinhaber: Advanced Energy Industries Gmbh, 72555 Metzingen (DE)
(72) Erfinder: Friesen, Johann, 59077 Hamm (DE); Brünig, Dirk, 59581 Warstein (DE); Schaffarra, Christian, 59602 Rüthen (DE)
(74) Vertreter: Graefe, Jörg

(56) Entgegenhaltungen:
- EP-A1- 1 837 984
- EP-A2- 0 563 790
- EP-B1- 0 710 051
- None

## Beschreibung

Die vorliegende Erfindung betrifft ein Verfahren nach dem Oberbegriff nach Anspruch 1. Die Erfindung betrifft insbesondere ein Verfahren zum Festlegen der Einschaltzeitpunkte einer Anzahl N von parallel geschalteten Leistungsstellern mit einer Schwingungspaketsteuerung, die an zumindest einen Außenleiter eines Ein- oder Mehrphasenwechselstromsystems angeschlossen sind, wobei die Schwingungspaketsteuerungen die Leistungssteller je nach Leistungsbedarf der an den Leistungsstellern angeschlossenen Last innerhalb einer Taktperiode mit der Taktperiodendauer T₀ für keine Netzperiode, eine oder mehrere Netzperioden oder alle Netzperioden einschalten, um während der Einschaltzeit Ts eine Leistung entsprechend dem Leistungsbedarf der Last zu übertragen, wobei eine Taktperiodendauer T₀ ein ganzzahliges Vielfaches der Dauer t₀ einer Netzperiode beträgt. Die Erfindung betrifft außerdem eine Vorrichtung, mit der ein solches Verfahren durchführbar ist.

Aus dem Dokument EP 0 710 051 B1 ist ein Verfahren bekannt, mit dem die Einstellzeitpunkte von an einem Außenleiter eines Wechselstromsystems parallel geschalteter Steller festgelegt werden können. Dieses Verfahren wird während des Betriebs der Leistungssteller durchgeführt. Ein vorheriges Festlegen der Einschaltzeitpunkte vor dem Betrieb der Leistungssteller ist nicht möglich, da das Verfahren ein iteratives Verfahren ist, mit dem der Betrieb der Leistungsteller von Taktperiode zu Taktperiode optimiert wird. Ziel des in dem Dokument offenbarten Verfahrens ist es, Flicker zu vermeiden. Als ein Vorteil des Verfahrens wird in Dokument EP 0 710 051 B1 genannt, dass mit dem Verfahren der Effektivwert des in einer Taktperiode auftretenden Gesamtstroms, d.h. der Effektivwert der Summen der Lastströme über eine Taktperiode reduziert wird.

Das Verfahren aus dem Dokument EP 0 710 051 B1 hat sich über viele Jahre in der Praxis bewährt. Es hat sich als robustes Verfahren erwiesen. Die technischen Möglichkeiten haben sich aber seit der Zeit der Erfindung des in dem Dokument EP 0 710 051 B1 beschriebenen Verfahrens weiter entwickelt. In dem Dokument EP 0 710 051 B1 wird als Vorteil des Verfahrens beschrieben, dass es ohne PC ausgeführt werden konnte. Das bedeutet, dass es ohne für die damalige Zeit besondere technische Hardware betrieben werden konnte. Durch die Beschleunigung der elektronischen Verarbeitung von Daten in Mikrocontrollern, Mikroprozessoren und dergleichen in den letzten 19 Jahren gibt es aber heute bessere technische Möglichkeiten, auch ressourcenaufwendigere Verfahren schnell zu erledigen.

Aus dem Dokument EP 1 837 984 A1 ist ein Verfahren zum Festlegen der Einschaltzeitpunkte einer Anzahl von N parallel geschalteten Stellmitteln 16 bekannt. Jedem der Stellmittel 16 ist ein Wellenzug zugeordnet, der zur Übertragung elektrische Energie zu Lasten 12 von den Stellmitteln durchgelassen wird. Jedem Wellenzug ist eine zeitliche Länge, die der Wellenzug braucht, um übertragen zu werden, und eine Leistung zugeordnet, die übertragen wird.

Im Zuge des Verfahrens wird im Schritt 100 des Verfahrens mehrfach eine Reihenfolge der Wellenzüge festgelegt (siehe D1, Abs. [0046], [0060], Satz 3 bis [0062]). Diese Reihenfolge hat bei der Festlegung der Einschaltzeitpunkte der Stellmittel 16 aber nur eine untergeordnete Rolle, wie man insbesondere den Absätzen [0049] bis [0062] entnehmen kann.

So wird schon das erste Stellmittel/der erste Wellenzug, der positioniert werden soll, nicht entsprechend der festgelegten Reihenfolge ausgewählt.

Nachdem der Rechner 28 einen zeitlichen Bereich festgelegt hat, während dem ein Wellenzug durchgelassen werden soll bzw. ein Stellmittel 16 eingeschaltet werden soll (Schritt 102), wird das Stellmittel/der Wellenzug ausgewählt, dem eine zeitliche Länge zugeordnet ist, die mit dem vom Rechner festgelegten zeitlichen Bereich identisch ist (Schritt 104). Gibt es mehrere Wellenzüge/Stellmittel, deren zeitliche Länge dem zeitlichen Bereich entspricht, wird der Wellenzug/das Stellmittel ausgewählt, dem eine größere Leistung zugeordnet ist (Abs. [0051]).

So werden auch die Startzeitpunkte/Einschaltzeitpunkte der übrigen Wellenzüge/Stellmittel 16 festgelegt, es sei denn zu einem zeitlichen Bereich findet sich kein Wellenzug/Stellmittel 16 dessen zeitliche Länge mit dem zeitlichen Bereich identisch ist. Erst dann spielt die zuvor festgelegt Reihenfolge eine Rolle. Findet sich zu dem zeitlichen Bereich kein Wellenzug mit gleicher zeitlicher Länge bzw. kein Stellmittel 16 mit gleicher Einschaltdauer, wird der nächste Wellenzug/das nächste Stellmittel in der im Schritt 100 festgelegten Reihenfolge ausgewählt (Schritt 106, Abs. [0053]).

Die im Schritt 100 festgelegte Reihenfolge spielt somit für die Reihenfolge, in welcher die Einschaltzeitpunkte festgelegt werden, nur eine untergeordnete Rolle. Entscheidend ist in erster Linie die Überstimmung der zeitlichen Länge eines Wellenzuges mit dem ausgewählten zeitlichen Bereich.

Insbesondere das mehrfache Festlegen einer Reihenfolge ist aufwändig.

Aus der Fig. 4 des Dokuments mit der Veröffentlichungsnummer EP 0 563 790 A2 ist ein Verfahren mit den Merkmalen des Oberbegriffs des Anspruchs 1 bekannt. Nach dem offenbarten Verfahren werden drei parallelgeschaltete Leistungssteller mit unterschiedlichen Einschaltdauern innerhalb einer Taktperiode eingeschaltet. Durch die eingeschalteten Leistungssteller werden während der Einschaltdauern unterschiedliche auf eine Netzperiode bezogene Effektivströme durchgelassen. Eine zentrale Steuerung, mit der das in der Fig. 4 des Dokumentes EP 0 563 790 A2 offenbarte Verfahren gesteuert wird, ermittelt die Einschaltzeitpunkte, an denen die Steller eingeschaltet werden, in Abhängigkeit der Einschaltzeitdauer sowie der Stromamplituden. Wie diese Festlegung im einzelnen erfolgt ist nicht offenbart.

Der Erfindung lag daher die Aufgabe zugrunde, ein Verfahren vorzuschlagen, welches unter Inkaufnahme einer größeren Komplexität das Festlegen der Einschaltzeitpunkte schneller erledigen kann als das aus dem Dokument EP 0 710 051 B1 bekannte Verfahren und weniger aufwändig ist als das aus dem Dokument EP 1 837 984 A1 bekannte Verfahren. Das erfindungsgemäße Verfahren soll insbesondere kein iteratives Verfahren sein, welches zum Festlegen von optimalen Einschaltzeitpunkten mehrere Taktperioden benötigt.

Das Einschalten erfolgt für Einschaltzeiten innerhalb von Taktperioden, so dass eine im Mittel gleichmäßige Versorgung der Senken aus der Quelle erfolgt. Die Aufgabe kann sich bei elektrischen Systemen stellen. Bei einem elektrischen System, bei dem sich die Aufgabe stellt, kann es sich neben dem vorstehend ausführlich diskutierten Beispiel einer Versorgung von Lasten durch Steller in Schwingungspaketsteuerung zum Beispiel um ein Verfahren handeln, mit dem elektrische Gleichstromverbraucher mit gleichem oder unterschiedlichem Leistungsbedarf über Schalter periodisch eingeschaltet und dadurch während der periodischen Einschaltzeiten aus einer Gleichspannungsquelle versorgt werden und die Gleichspannungsquelle einen möglichst gleichmäßigen Strom liefern soll.

Diese Aufgabe wird durch ein erfindungsgemäßes Verfahren mit den Merkmalen des Anspruchs 1 gelöst. Die Erfindung wird in den Ansprüchen 2 bis 10 weitergebildet.

Nachfolgend wird die Erfindung in der Ausbildung als Verfahren zum Festlegen der Einschaltzeitpunkte einer Anzahl N von parallel geschalteten Leistungsstellern mit einer Schwingungspaketsteuerung näher erläutert.

Das Ermitteln der Reihenfolge der Steller ist eine rechenintensive Aufgabe, die früher mit preiswerten Mitteln nicht in kurzer Zeit, insbesondere nicht innerhalb einer Taktperiode durchführbar war. Dieses ist mittels moderner, preisgünstiger Hardware neben dem Festlegen der Einschaltzeitpunkte der Steller in der Reihenfolge innerhalb einer Taktperiode durchführbar, selbst wenn eine Anzahl von zum Beispiel N=8 Stellern parallel geschaltet sind, deren Einschaltzeitpunkte aufeinander abgestimmt werden sollen.

Festlegung der Einschaltzeitpunkte in der zuvor ermittelten Reihenfolge bedeutet übrigens nicht, dass zum Beispiel der dritte Steller nach dem zweiten Steller eingeschaltet wird. Es bedeutet, dass zunächst der Einschaltzeitpunkt des zweiten Stellers festgelegt wird und erst wenn dieser feststeht, der Einschaltzeitpunkt des dritten Stellers festgelegt wird.

Das Festlegen der Reihenfolge ermöglicht es, die Einschaltzeitpunkte vorab, das heißt schon vor der Inbetriebnahme der Steller nach noch zu erörternden Kriterien festzulegen. Die Steller können dann unmittelbar mit den gewünschten Einschaltzeitpunkten eingeschaltet werden, so dass von Anfang an keine Flicker entstehen und von Anfang an der Effektivwert des Gesamtstroms über eine Taktperiode möglichst klein ist.

Es hat sich gezeigt, dass gute Ergebnisse erzielt werden, wenn die Steller zunächst nach dem Effektivwert Iₙ des einzustellenden Laststroms während der Einschaltzeit T_{S,n} sortiert werden, der Effektivwert Iₙ also ein erstes Sortierkriterium ist. Bei gleichem Effektivwert Iₙ wird vorteilhaft die Einschaltzeit T_{S,n} als zweites Sortierkriterium gewählt wird. Vorzugsweise werden die Steller gemäß absteigendem ersten und absteigendem zweiten Sortierkriterium sortiert.

Erfindungsgemäß wird der Einschaltzeitpunkt des ersten Stellers der Reihenfolge auf den Beginn einer Taktperiode festgelegt. Das bedeutet dann, dass dieser Steller stets mit dem Beginn der Taktperioden eingeschaltet wird, es sei denn, dass sich aufgrund einer Änderung des einzustellenden Laststroms und eines sich deshalb ändernden Effektivwertes Iₙ oder einer sich ändernden Einschaltzeit T_{S,n} die Reihenfolge der Steller ändert und der bislang erste Steller in der Reihenfolge auf eine niederrangige Position der Reihenfolge rutscht.

Vorteilhaft wird die Reihenfolge regelmäßig, vorzugsweise während jeder Taktperiode von neuem erstellt, so dass in der auf die Erstellung der Reihenfolge folgenden Taktperiode die Steller zu den entsprechend der neu erstellten Reihenfolge festgelegten Einschaltzeitpunkten eingeschaltet werden können.

Zum Festlegen der Einschaltzeitpunkte der Steller, die in der Reihenfolge hinter dem ersten Steller stehen, wird wie folgt vorgegangen, wobei die nachfolgend beschriebenen Schritte ggf. mehrfach durchlaufen werden, bis die Einschaltzeitpunkte aller Steller der Reihenfolge festgelegt sind:

Zunächst betrachtet man eine Taktperiode. Die Taktperiode wird in Bereiche geteilt. Ist bislang nur der Einschaltzeitpunkt des ersten Stellers festgelegt, ist die Teilung der Taktperiode einfach: Sofern die Einschaltzeit gleich der Taktperiodendauer ist, wird nur ein Bereich festgelegt. Ist die Einschaltdauer dagegen kleiner, werden zwei Bereiche festgelegt, nämlich ein Bereich in dem der erste Steller eingeschaltet ist und ein Bereich, in dem der erste Steller ausgeschaltet ist.

Sind dagegen die Einschaltzeitpunkte von mehr als einem Steller festgelegt, wird die Taktperiode in einen oder mehrere Bereiche eingeteilt. Die Bereiche haben folgende Merkmale:
- Im Bereich ist eine erste Summe konstant, wobei die erste Summe die Summe der auf eine Netzperiode (to) bezogenen Effektivwerte der Lastströme ist, die von den in dem Bereich eingeschalteten Stellern bereitgestellt werden, deren Einschaltzeitpunkte bereits festgelegt sind, oder
- im Bereich ist nur ein Steller, dessen Einschaltzeitpunkt bereits festgelegt ist, eingeschaltet oder es sind mehrere Steller, deren Einschaltzeitpunkte bereits festgelegt sind, nacheinander eingeschaltet, sofern der auf eine Netzperiode bezogene Effektivwert des von diesen Stellern zur Verfügung zu stellenden Laststroms gleich ist, wobei dieser Effektivwert im folgenden als erste Summe gilt oder
- im Bereich ist kein Steller, dessen Einschaltzeitpunkt bereits festgelegt ist, eingeschaltet.

Überlegungen haben gezeigt, dass die Taktperiode bei n Stellern in maximal n+1 Bereiche eingeteilt werden kann, wobei n+1 nicht größer werden kann als die Anzahl der Netzperioden in einer Taktperiode.

Ist nur ein Bereich vorhanden, wird dieser Bereich als Zielbereich definiert. Sind mehrere Bereiche vorhanden, findet eine Auswahl eines Bereiches als Zielbereich statt:
Aus den Bereichen wird nun vorteilhaft der Bereich ausgewählt, in dem kein Steller, dessen Einschaltzeitpunkt bereits festgelegt ist, eingeschaltet ist. Ist ein solcher Bereich nicht vorhanden, wird der Bereich ausgewählt, in dem die erste Summe am kleinsten ist wobei vorzugsweise bei zwei Bereichen, denen die gleiche erste Summe zugeordnet ist, der längere Bereich als Zielbereich gewählt wird. Der ausgewählte Bereich wird als so genannter Zielbereich definiert. Sind zwei oder mehr Bereiche vorhanden, in denen die erste Summe gleich groß ist, wird der Bereich ausgewählt und als Zielbereich definiert, dessen Länge am größten ist.

Spätestens wenn der Zielbereich definiert ist, sollte bei einer vorteilhaften Vorgehensweise der nächste Steller in der Reihenfolge ausgewählt werden.

Bei der Festlegung des Einschaltzeitpunkts des ausgewählten Stellers werden erfindungsgemäß zunächst zwei Fälle unterschieden, nämlich der Fall, in dem die Einschaltzeit Ts des ausgewählten Stellers kleiner oder gleich der Länge des Zielbereichs ist, und der Fall in dem die Einschaltzeit Ts des ausgewählten Stellers größer als die Länge des Zielbereichs ist:
Für den Fall, dass die Einschaltzeit Ts des ausgewählten Stellers kleiner oder gleich der Länge des Zielbereichs ist, kann der Einschaltzeitpunkt des ausgewählten Stellers ohne weiteres festgelegt werden. Der Einschaltzeitpunkt des ausgewählten Stellers wird vorzugsweise so festgelegt, dass die Einschaltzeit in dem Zielbereich liegt.

Für den Fall, dass die Einschaltzeit Ts des ausgewählten Stellers größer als die Länge des Zielbereichs ist, wird erfindungsgemäß der Zielbereich um einen angrenzenden Bereich erweitert.

Zum Erweitern des Zielbereiches kann gemäß der Erfindung der dem Zielbereich angrenzende Bereich mit der geringsten ersten Summe in den Zielbereich einbezogen werden. Sind die ersten Summen der angrenzenden Bereiche gleich groß, wird der längere Bereich bevorzugt in den Zielbereich einbezogen. Der bisherige Zielbereich und der einbezogene Bereich definieren so einen neuen Zielbereich. Nach der Festlegung des neuen Zielbereichs kann dann erneut geprüft werden, ob die Einschaltzeit Ts des ausgewählten Stellers kleiner oder gleich der Länge des Zielbereichs ist. Je nach dem wie die Prüfung ausgeht, wird dann der Einschaltzeitpunkt des Stellers festgelegt oder der Zielbereich kann ein weiteres Mal auf die bereits beschriebene Art und Weise erweitert werden. Vorzugsweise wird der Zielbereich so lange erweitert, bis die Einschaltzeit Ts des ausgewählten Stellers kleiner oder gleich der Länge des Zielbereichs ist.

Ist für den zuletzt ausgewählten Steller der Einschaltzeitpunkt festgelegt, wird anschließend geprüft, ob für alle Steller ein Einschaltzeitpunkt festgelegt worden ist.

Für den Fall, dass nicht für alle Steller ein Einschaltzeitpunkt festgelegt worden ist, kann dann gemäß der Erfindung eine neue Einteilung der Taktperiode in Bereiche, eine neue Zielbereichsbestimmung, eine Auswahl des nächsten Stellers aus der Reihenfolge und ein Festlegen des Einschaltzeitpunktes des ausgewählten, nächsten Stellers erfolgen, so wie es bereits beschrieben wurde.

Beim Festlegen des Einschaltzeitpunktes des ausgewählten Stellers kann auf verschiedene Art und Weise vorgegangen werden. Vorzugsweise wird der Einschaltzeitpunkt des ausgewählten Stellers so festgelegt, dass die Einschaltzeit des ausgewählten Stellers in dem Zielbereich liegt.

Es hat sich als vorteilhaft erwiesen, in dem Fall, in dem der Zielbereich nicht durch eine Erweiterung eines ursprünglichen Zielbereichs entstanden ist, zu prüfen, welcher der dem Zielbereich benachbarten Bereiche die kleinste erste Summe hat. Dann wird der Einschaltzeitpunkt vorzugsweise so gewählt, dass die Einschaltzeit des ausgewählten Stellers an den benachbarten Bereich mit der größten ersten Summe angrenzt. Dadurch kann erreicht werden, dass der an dem Einschaltzeitpunkt bislang vorliegende Sprung und ein evtl. dadurch entstehender Flicker vermindert wird.

Ist dagegen der Zielbereich durch Erweiterung eines ursprünglichen Zielbereichs entstanden und ist gleichzeitig die Länge des Zielbereichs kleiner als die Taktperiodendauer T₀, kann gemäß der Erfindung so vorgegangen werden, dass der Einschaltzeitpunkt oder Ausschaltzeitpunkt des ausgewählten Stellers auf den Rand des Zielbereichs festgelegt wird, an dem der Zielbereich bei der letzten Erweiterung nicht verändert wurde. Dieses Vorgehen stellt sicher, dass der auf die Taktperiode bezogene Effektivwert des gesamten Laststroms im Außenleiter möglichst klein ist.

Ist dagegen der Zielbereich durch Erweiterung eines ursprünglichen Zielbereichs entstanden und ist gleichzeitig die Länge des Zielbereichs gleich der Taktperiodendauer T₀, kann gemäß der Erfindung so vorgegangen werden, dass entweder das Ende der Einschaltzeit oder der Anfang der Einschaltzeit des ausgewählten Stellers auf den rechten oder den linken Rand des zuletzt zum Zielbereich hinzugenommenen Bereichs gelegt wird. Vorzugsweise wird dann untersucht, an welchem Rand des zuletzt zum Zielbereich hinzugenommenen Bereichs die größere Differenz zwischen der ersten Summe des zuletzt zum Zielbereich hinzugenommenen Bereichs und dem benachbarten Bereich vorhanden ist. Ist dieser Rand der rechte Rand des zuletzt zum Zielbereich hinzugenommenen Bereichs, wird der Einschaltzeitpunkt des ausgewählten Stellers auf den rechten Rand des zuletzt zum Zielbereich hinzugenommenen Bereichs gelegt. Ist der Rand der linke Rand des zuletzt zum Zielbereich hinzugenommenen Bereichs, wird der Ausschaltzeitpunkt des ausgewählten Stellers auf den linken Rand des zuletzt zum Zielbereich hinzugenommenen Bereichs gelegt, wodurch auch der Einschaltzeitpunkt des ausgewählten Stellers festgelegt ist.

Zum Erweitern des Zielbereiches kann man folgendermaßen vorgehen:
- Für den Fall, dass dem Zielbereich nur ein Bereich benachbart ist, wird dieser dem Zielbereich angrenzende Bereich in den Zielbereich einbezogen.
- Für den Fall dass dem Zielbereich mehrere Bereiche benachbart sind, wird der dem Zielbereich angrenzende Bereich mit der geringsten ersten Summe in den Zielbereich einbezogen.

Der Erfindung lag außerdem die Aufgabe zu Grunde, eine Vorrichtung vorzuschlagen, mit der Einschaltzeitpunkte unter Inkaufnahme einer größeren Komplexität schneller festgelegt werden können als mit einer aus dem Dokument EP 0 710 051 B1 bekannten Vorrichtung.

Dieses gelingt mit einer erfindungsgemäßen Vorrichtung zum Festlegen der Einschaltzeitpunkte einer Anzahl N parallel geschalteter Leistungssteller mit einer Schwingungspaketsteuerung an einem Außenleiter eines Ein- oder Mehrphasenwechselstromsystems, die zumindest eine Schnittstelle zur Verbindung mit den Stellern aufweist, und mit der zumindest ein Signal zum Festlegen der Einschaltzeitpunkte der Steller erzeugbar ist, welches an der Schnittstelle bereitstellbar ist, wobei die Vorrichtung zum Festlegen der Einschaltzeitpunkte ein erfindungsgemäßes Verfahren nutzt. Für die Kommunikation zwischen der erfindungsgemäßen Vorrichtung kann ein Bus genutzt werden.

Vorteilhaft weist die Vorrichtung zumindest eine Schnittstelle auf, über welche die Effektivwerte Iₙ der Lastströme, die durch die an die Steller angeschlossenen Lasten fließen sollen, in die Vorrichtung einlesbar sind. Vorteilhaft weist die Vorrichtung zumindest eine Schnittstelle auf, über welche die Einschaltzeiten Ts der Steller in die Vorrichtung einlesbar sind.

Die Erfindung wird anhand der Zeichnungen näher erläutert. Es zeigt
- Fig. 1: ein erstes Strom-Zeit-Diagramm mit der Darstellung des Effektivwertes I₁ des von einem ersten Steller 1 einzustellenden Laststroms sowie der Einschaltzeit T_{S,1} des ersten Stellers,
- Fig. 2: ein zweites Strom-Zeit-Diagramm, welches aus dem Diagramm gemäß Fig. 1 entwickelt wurde, mit der Darstellung der Einschaltzeit T_{S,1} des ersten Stellers und eines Effektivwertes I₂ und einer Einschaltzeit T_{S,2} eines zweiten Stellers 2,
- Fig. 3: ein drittes Strom-Zeit-Diagramm, welches aus dem Diagramm gemäß Fig. 2 entwickelt wurde, mit der Darstellung der Effektivwerte I_{,1} I₂ des vom ersten und zweiten Steller 1, 2 einzustellenden Laststroms sowie der Einschaltzeit T_{S,1}, T_{S,2}, des ersten und des zweiten Stellers und einem Effektivwert I₃ und einer Einschaltzeit T_{S,3} eines dritten Stellers 3,
- Fig. 4: ein viertes Strom-Zeit-Diagramm, welches aus dem Diagramm gemäß Fig. 3 entwickelt wurde, mit der Darstellung von Bereichen A, B, C, D,
- Fig. 5: ein fünftes Strom-Zeit-Diagramm, welches aus dem Diagramm gemäß Fig. 4 entwickelt wurde, mit der Darstellung einer Einschaltzeit T_{S,4} eines vierten Stellers 4,
- Fig. 6: ein sechstes Strom-Zeit-Diagramm, welches aus dem Diagramm gemäß Fig. 5 entwickelt wurde, welches Bereiche A, B, C, D, E zeigt,
- Fig. 7: ein siebtes Strom-Zeit-Diagramm, welches aus dem Diagramm gemäß Fig. 6 entwickelt wurde, mit der Darstellung der Bereiche A, B, C, D, E und einem Effektivwert I₅ und einer Einschaltzeit T_{S,5} eines fünften Stellers 5,
- Fig. 8: ein achtes Strom-Zeit-Diagramm, welches aus dem Diagramm gemäß Fig. 7 entwickelt wurde, welches Bereiche A, B, C, D, E, F zeigt,
- Fig. 9: ein Ablaufdiagramm eines erfindungsgemäßen Verfahrens, und
- Fig.10: eine Schaltungsanordnung mit den Stellern 1 bis 5 und einer erfindungsgemäßen Vorrichtung.

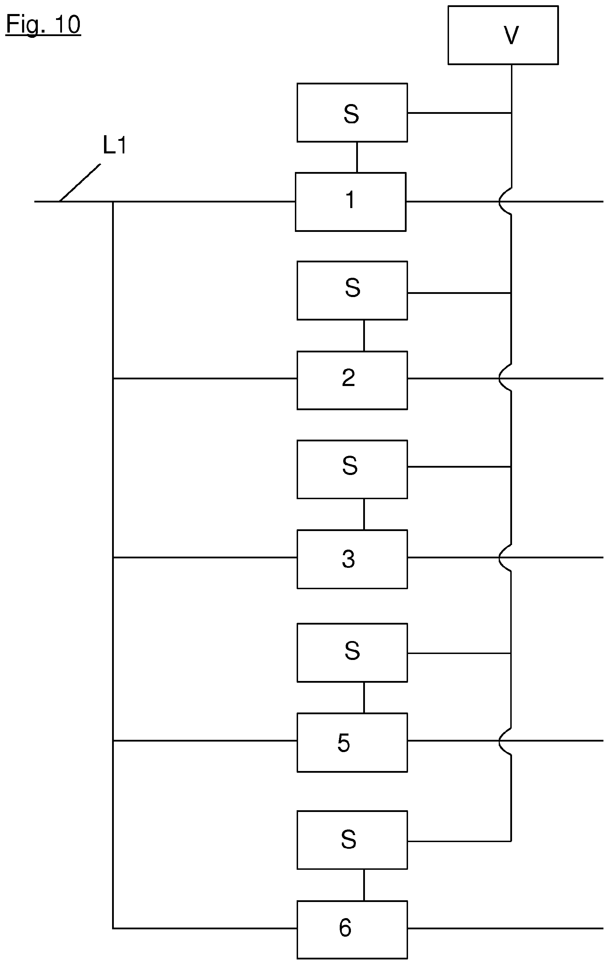

In dem anhand der Figuren nachfolgend beschriebenen Beispiel sollen die Einschaltzeitpunkte von fünf Stellern 1, 2, 3, 4, 5 festgelegt werden, die parallel geschaltet an einem Außenleiter L1 eines Wechselstromsystems angeschlossen sind und mit Schwingungspaketsteuerungen betrieben werden. Die Einschaltzeitpunkte sollen von einer erfindungsgemäßen Vorrichtung V Steuergeräten S der Steller 1, 2, 3, 4, 5, auf denen die Schwingungspaketsteuerungen implementiert sind, vorgegeben werden. Eine Schaltungsanordnung mit den Stellern 1, 2, 3, 4, 5, deren Steuergeräten und der erfindungsgemäßen Vorrichtung ist in Fig. 10 dargestellt.

Zum Festlegen der Einschaltzeitpunkte ist zunächst notwendig, dass der erfindungsgemäßen Vorrichtung V
- die Anzahl N der Steller,
- die Einschaltzeiten T_{S,n} der Steller, während der während einer Taktperiode mit der Dauer T₀ die Steller ein Wellenpaket zu den an den Stellern angeschlossenen Lasten durchlassen, und
- die Höhe des auf eine Netzperiode to bezogenen Effektivstroms Iₙ, der von den Stellern während der Einschaltzeit T_{S,n} zur

Einstellung eines geforderten Laststrom erforderlich ist, mitgeteilt werden, wobei Iₙ der Effektivwert des n-ten Stellers und T_{S,n} die Einschaltdauer des n-ten Stellers ist.

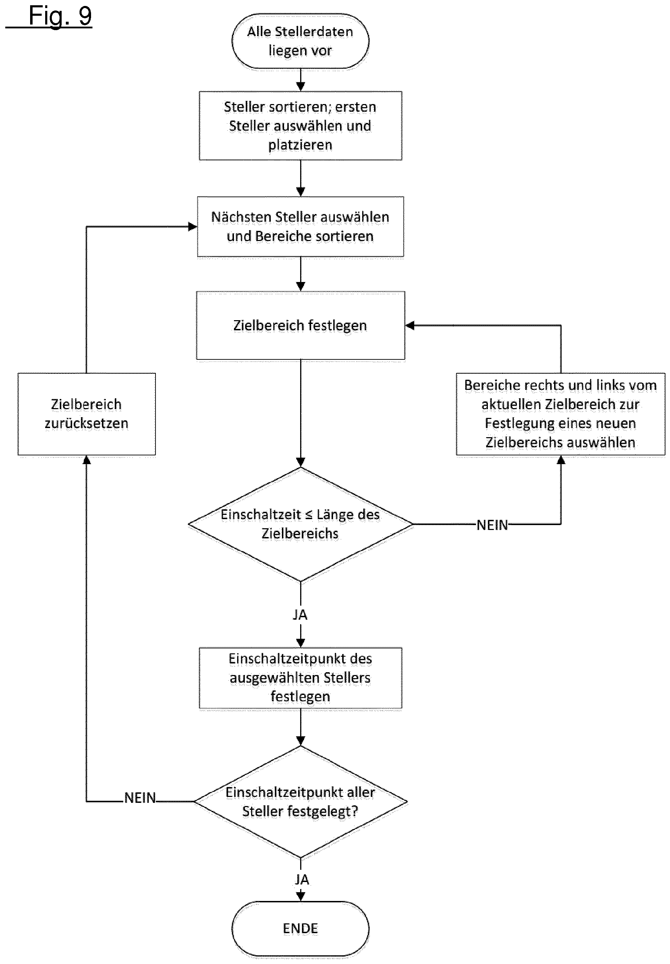

Gemäß dem erfindungsgemäßen Verfahren, welches in dem Ablaufdiagramm der Fig. 9 dargestellt ist, werden zunächst die Steller 1, 2, 3, 4, 5 sortiert und in eine Reihenfolge gebracht. Das erste Sortierkriterium ist der Effektivstrom Iₙ. Für den Fall, dass zwei Stellern der gleiche Effektivstrom Iₙ zugeordnet ist, gilt das zweite Sortierkriterium, welches die Einschaltzeit T_{S,n} ist. Gemäß beiden Sortierkriterien wird abwärts sortiert.

Für die Effektivströme gilt I₁>I₂=I₃>I₄>I₅. Durch die Effektivströme Iₙ ist keine eindeutige Sortierung möglich, da die Effektivströme I₂ und I₃ gleich groß sind. Es kommt daher auf die Einschaltzeiten T_{S,n} der Steller 2, 3 an. Da der Steller 2 die längere Einschaltzeit T_{S,2}> T_{S,3} als der Steller 3 hat, steht der Steller 2 in der Reihenfolge vor dem Steller 3. Die Reihenfolge ist Steller 1, Steller 2, Steller 3, Steller 4, Steller 5.

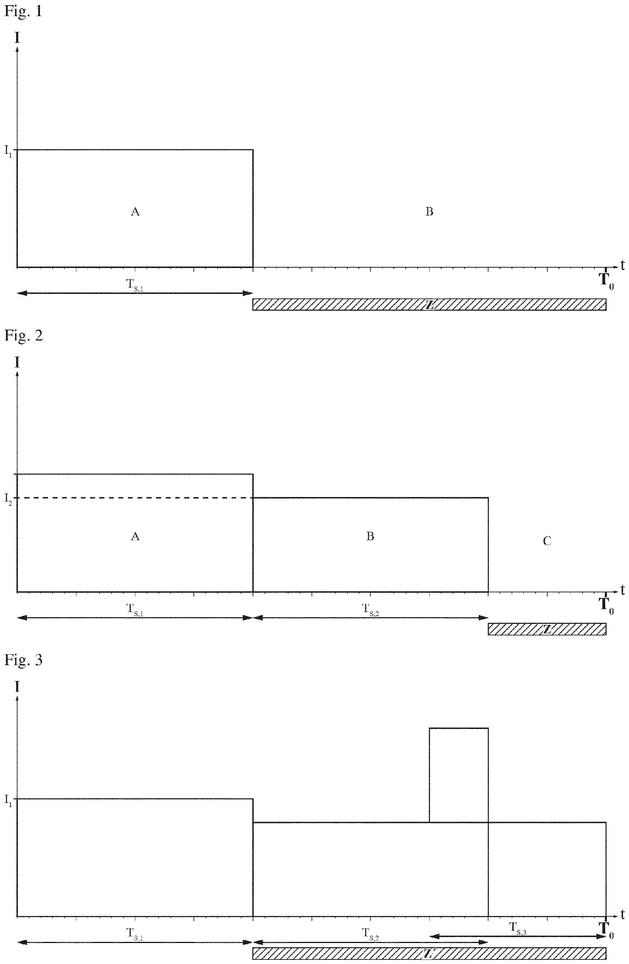

Nun wird der Einschaltzeitpunkt des ersten Stellers 1 auf den Beginn der Taktperiode festgelegt (Fig. 1).

Anschließend werden in der Taktperiode zwei Bereiche A, B festgelegt. Es ergeben sich der Bereich A, der Bereich in dem der erste Steller 1 eingeschaltet ist, und der Bereich B, in dem der erste Steller 1 ausgeschaltet ist.

Nun werden diese beiden Bereiche A, B betrachtet und es wird aus den Bereichen ein Bereich ausgewählt und als Zielbereich Z definiert. Der Zielbereich Z ist der Bereich, in dem der erste Steller 1 ausgeschaltet ist. Also ist der Zielbereich der Bereich B.

Nun wird der nächste Steller in der Reihenfolge nach dem Steller, dessen Einschaltzeitpunkt festegelegt ist, ausgewählt. Es handelt sich dabei um den Steller 2. Es wird geprüft, ob die Einschaltzeit T_{S,2} des zweiten Stellers 2 kleiner oder gleich der Länge des Zielbereichs Z ist. Da das der Fall ist, wird der Einschaltzeitpunkt des zweiten Stellers 2 festgelegt.

Zum Festlegen des Einschaltzeitpunkts wird geprüft, welchem dem Zielbereich Z benachbarten Bereich eine größere erste Summe zugeordnet ist. Da die Taktperiode in nur zwei Bereiche A, B unterteilt ist, hat der Zielbereich Z nur einen benachbarten Bereich A, der allerdings wegen der Periodizität dem Zielbereich vorangeht als auch (in der nächsten Taktperiode) folgt. In diesem Fall, wie auch in anderen Fällen, in denen den dem Zielbereich benachbarten Bereichen gleiche erste Summen zugeordnet sind, kann der Einschaltzeitpunkt im Grunde beliebig gewählt werden, solange die Einschaltzeit T_{S,2} entweder an das Ende oder an den Anfang des Bereiches A anschließt. Im Beispiel wurde sich willkürlich dafür entschieden, den Einschaltzeitpunkt des zweiten Stellers 2 so festzulegen, dass die Einschaltzeit T_{S,2} an den Bereich A anschließt (Fig. 2) und der Einschaltzeitpunkt des zweiten Stellers 2 mit dem Ende des Bereiches A zusammenfällt.

Bei einer folgenden Prüfung wird festgestellt, dass noch für weitere Steller 3, 4, 5 Einschaltzeitpunkte festzulegen sind.

Das bedeutet, dass mit dem erfindungsgemäßen Verfahren fortgefahren werden muss. Erneut wird die Taktperiode in Bereiche A, B, C eingeteilt und ein Zielbereich Z bestimmt (Fig. 2). Als Zielbereich Z wird der Bereich C bestimmt, da in diesem Bereich keiner der Steller 1, 2 eingeschaltet ist, deren Einschaltzeitpunkt bereits festgelegt wurde (Fig. 2).

Der nächste Steller, nämlich der Steller 3 wird ausgewählt. Zu diesem Steller 3 wird geprüft, ob die Einschaltzeit T_{S,3} kleiner oder gleich der Länge des Zielbereichs Z ist. Da der Zielbereich Z kleiner ist, wird der Zielbereich Z erweitert. Zur Erweiterung wird geprüft, ob der dem Zielbereich Z links benachbarte Bereich B oder der dem Zielbereich Z rechts benachbarte Bereich A zur Erweiterung herangezogen wird. Da in den Bereichen A, B nur ein Steller eingeschaltet ist, ist die erste Summe gleich den Effektivwerten der allein eingeschalteten Steller 1, 2. Es wird daher im Ergebnis geprüft, in welchem Bereich A, B der jeweils eingeschaltete Steller 1, 2 einen Laststrom mit einem kleineren, auf eine Netzperiode to bezogenen Effektivwert I1, I2 des einzustellenden Laststroms hat. Ist dieser Bereich identifiziert, im Beispiel ist es der Bereich B, wird der identifizierte Bereich B in den Zielbereich einbezogen, d.h. der ursprüngliche Zielbereich Z (Fig. 2) und der Bereich B bilden zusammen einen neuen Zielbereich, der in Fig. 3 mit Z' bezeichnet ist.

Nach einer erneuten Prüfung, ob der Zielbereich Z' größer oder gleich der Einschaltzeit T_{S,3} des dritten Stellers 3 ist, wird dann, da das Ergebnis der Prüfung ergeben hat, dass der Zielbereich Z' groß genug ist, der Einschaltzeitpunkt des dritten Stellers 3 im Zielbereich Z' festgelegt. Dazu wird der Ausschaltzeitpunkt auf den rechten Rand des Zielbereichs Z' gelegt, da der Zielbereich Z' zuletzt auf der linken Seite erweitert worden ist und der Zielbereich Z' kleiner ist als die Taktperiodendauer T₀ (Fig. 3).

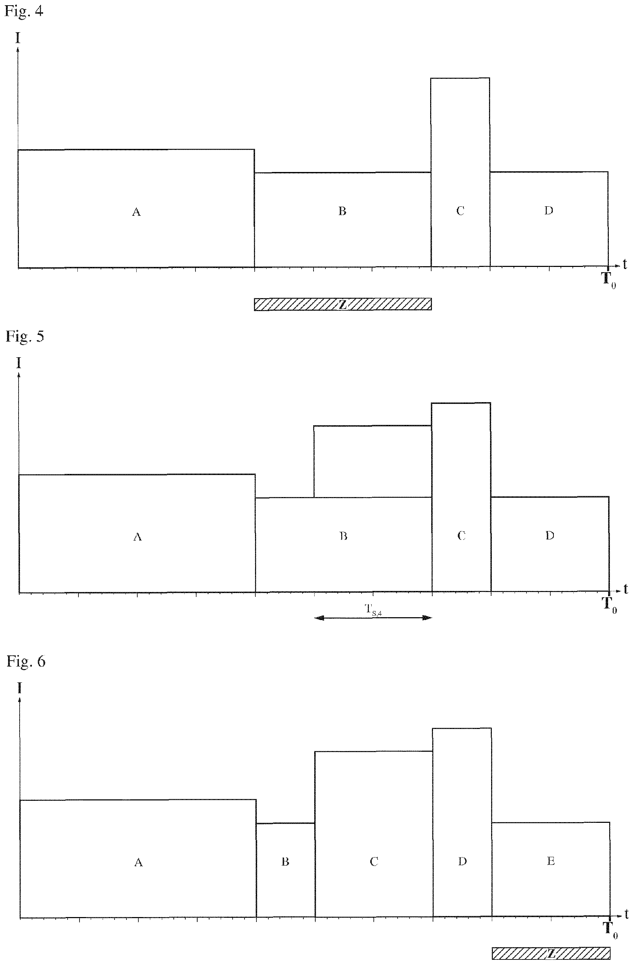

Nach der Platzierung des dritten Stellers 3 wird wieder geprüft, ob die Einschaltzeitpunkte weiterer Steller 4, 5 festzulegen sind. Da das der Fall ist, wird die Taktperiode in Bereiche A, B, C, D eingeteilt (Fig. 4). Von diesen Bereichen sind den Bereichen B und C, in denen jeweils nur einer der Steller 1, 2, 3 eingeschaltet ist, deren Einschaltzeitpunkte bereits festgelegt sind, die gleichen Effektivwerte der Lastströme zugeordnet (d.h. sie haben die gleiche erste Summe). Da aber der Bereich B länger ist als der Bereich C, wird der Bereich B als Zielbereich Z bestimmt (Fig. 4).

Da die Einschaltzeit T_{S,4} des vierten Stellers 4 kleiner ist als der Zielbereich Z, kann der Einschaltzeitpunkt des vierten Stellers 4 ohne Erweiterung des Zielbereichs Z festgelegt werden. Deshalb wird der Einschaltzeitpunkt so gewählt, dass die Einschaltzeit des vierten Stellers 4 an den benachbarten Bereich mit der größten ersten Summe angrenzt (Fig. 5) um Flicker zu vermindern. Das ist im Beispiel der Bereich C, in dem die erste Summe aus dem Effektivwert I₂ und I₃ gebildet wird.

Nach der Platzierung des vierten Stellers 4 wird wieder geprüft, ob die Einschaltzeitpunkte eines weiteren Stellers 5 festzulegen sind. Da das der Fall ist, wird die Taktperiode in Bereiche A, B, C, D, E eingeteilt (Fig. 6). Von diesen Bereichen sind den Bereichen B und E, in denen jeweils nur einer der Steller 1, 2, 3 eingeschaltet sind, deren Einschaltzeitpunkte bereits festgelegt sind, die gleichen Effektivwerte der Lastströme zugeordnet, d.h. sie haben die gleiche erste Summe. Die ersten Summen der Bereiche B und E sind gleichzeitig auch die geringsten ersten Summen in allen Bereichen A, B, C, D, E. Da der Bereich E länger ist als der Bereich B, wird der Bereich E als Zielbereich Z bestimmt.

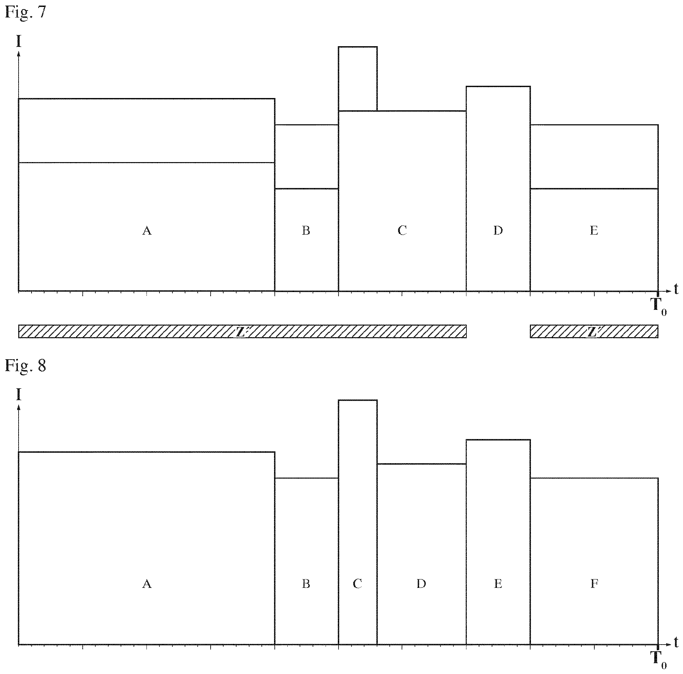

Da die Einschaltzeit T_{S,5} größer ist als der Zielbereich Z, muss der (ursprüngliche) Zielbereich Z erweitert werden. Dazu wird solange einer der beiden benachbarten Bereiche in den Zielbereich Z einbezogen, bis der Zielbereich Z größer oder gleich der Einschaltzeit T_{S,5} ist. Das wird erreicht, in dem nacheinander die Bereiche A, B und C in den Zielbereich einbezogen werden (Fig. 7).

Nun muss noch innerhalb des Zielbereiches Z der Einschaltzeitpunkt festgelegt werden, wobei zu beachten ist, dass die Einschaltzeit T_{S,5} innerhalb des Zielbereichs Z liegt.

Da der Zielbereich Z durch Erweiterung eines ursprünglichen Zielbereichs Z entstanden ist, aber gleichzeitig die Länge des Zielbereichs Z kleiner als die Taktperiodendauer T₀ ist, kann gemäß der Erfindung so vorgegangen werden, dass der Einschaltzeitpunkt des fünften Stellers 5 auf den Rand des Zielbereichs Z festgelegt wird, an dem der Zielbereich Z bei der letzten Erweiterung nicht verändert wurde. Das ist im Beispiel der linke Rand des Zielbereichs Z (Fig. 7).

Wenn jetzt noch eine Einschaltzeit eines weiteren Stellers festgelegt werden müsste, könnte die Taktperiode in Bereiche A, B, C, D, E, F eingeteilt werden, wie es in Fig. 8 dargestellt ist.

## Patentansprüche

1. Verfahren zum Festlegen der Einschaltzeitpunkte einer Anzahl N von parallel geschalteten Stellmitteln, zum Beispiel Leistungssteller mit einer Schwingungspaketsteuerung, Schaltern oder Ventilen (1, 2, 3, 4, 5), die an eine Quelle (L1) angeschlossen sind, wobei die Stellmittel (1, 2, 3, 4, 5) je nach Bedarf eine den Stellmitteln (1, 2, 3, 4, 5) nachgeordnete Senke innerhalb einer Taktperiode mit der Taktperiodendauer (T₀) einschalten, um während der Einschaltzeit (T_{S,1}, T_{S,2}, T_{S,3}, T_{S,4}, T_{S,5}) einen elektrischen Strom entsprechend dem Bedarf der Senke zu übertragen, wobei die Stellmittel (1, 2, 3, 4, 5) in eine Reihenfolge einer Ordnungsgröße (I₁, I₂, I₃, I₄, I₅) gebracht werden, wobei die Ordnungsgröße (I₁, I₂, I₃, I₄, I₅) die Höhe des auf eine Netzperiode (to) bezogenen Effektivstroms (Iₙ) ist, der von den Stellern während der Einschaltzeit (T_{S,n}) zur Einstellung eines geforderten Laststrom erforderlich ist, und wobei Iₙ der Effektivwert und T_{S,n} die Einschaltdauer eines n-ten Stellers der Steller ist,
**dadurch gekennzeichnet,**
- **dass** die Festlegung der Einschaltzeitpunkte der Stellmittel (1, 2, 3, 4, 5) in dieser Reihenfolge erfolgt,
- **dass** der Einschaltzeitpunkt des ersten Stellmittels (1, 2, 3, 4, 5) der Reihenfolge auf den Beginn einer Taktperiode festgelegt wird,
- **dass** für den Fall, dass noch für wenigstens ein weiteres Stellmittel (1, 2, 3, 4, 5) ein Einschaltzeitpunkt festzulegen ist, das nächste Stellmittel (n) in der Reihenfolge ausgewählt wird,
- **dass**, wenn die Einschaltzeit (T_{S,1}, T_{S,2}, T_{S,3}, T_{S,4}, T_{S,5}) des ersten Stellmittels (1, 2, 3, 4, 5) kleiner ist als die Taktperiodendauer (T₀), die Taktperiode in zwei Bereiche geteilt wird, nämlich in einen Bereich, in dem das erste Stellmittel (1, 2, 3, 4, 5) ausgeschaltet ist, und in einen Bereich, in dem das erste Stellmittel (1, 2, 3, 4, 5) eingeschaltet ist, wobei der Bereich, in dem das erste Stellmittel (1, 2, 3, 4, 5) ausgeschaltet ist, als Zielbereich definiert wird, oder wenn die Einschaltzeit (T_{S,1}, T_{S,2}, T_{S,3}, T_{S,4}, T_{S,5}) des ersten Stellmittels gleich der Taktperiodendauer (T₀) ist, die Taktperiode als Zielbereich definiert wird,
- **dass** geprüft wird, ob die Einschaltzeit (T_{S,n}) des ausgewählten Stellmittels (1, 2, 3, 4, 5) kleiner oder gleich der Länge des Zielbereichs (Z) ist, und
- **dass** für den Fall, dass die Einschaltzeit (T_{S,1}, T_{S,2}, T_{S,3}, T_{S,4}, T_{S,5}) des ausgewählten Stellmittels (1, 2, 3, 4, 5) größer als die Länge des Zielbereichs (Z) ist, der Zielbereich (Z) um einen angrenzenden Bereich erweitert wird.

2. Verfahren nach Anspruch 1, **dadurch gekennzeichnet, dass** in dem Fall, dass die Ordnungsgröße (I₁, I₂, I₃, I₄, I₅) von zwei oder mehreren Stellmitteln (1, 2, 3, 4, 5) gleich groß ist, die Reihenfolge zusätzlich durch die Einschaltzeit (T_{S,1}, T_{S,2}, T_{S,3}, T_{S,4}, T_{S,5}) bestimmt wird.

3. Verfahren nach Anspruch 1 oder 2, **dadurch gekennzeichnet, dass** die Reihenfolge absteigend ist.

4. Verfahren nach einem der Ansprüche 1 bis 3, **dadurch gekennzeichnet, dass** für den Fall, dass die Einschaltzeit (T_{S1}, T_{S,2}, T_{S,3}, T_{S,4}, T_{S,5}) des ausgewählten Stellmittels (1, 2, 3, 4, 5) kleiner oder gleich der Länge des Zielbereichs (Z) ist, der Einschaltzeitpunkt des ausgewählten Stellmittels (1, 2, 3, 4, 5) festgelegt wird.

5. Verfahren nach einem der Ansprüche 1 bis 4, **dadurch gekennzeichnet, dass** nach einer erneuten Prüfung, ob die Einschaltzeit (T_{S,1}, T_{S,2}, T_{S,3}, T_{S,4}, T_{S,5}) des ausgewählten Stellmittels (1, 2, 3, 4, 5) kleiner oder gleich der Länge des Zielbereichs (Z) ist, in Abhängigkeit vom Prüfungsergebnis entweder nach dem in Anspruch 9 oder nach dem in Anspruch 10 angegebenen Verfahrensschritten fortgefahren wird.

6. Verfahren nach Anspruch 5, **dadurch gekennzeichnet, dass** nach Festlegung des Einschaltzeitpunktes des ausgewählten Stellmittels (1, 2, 3, 4, 5) und für den Fall, dass noch nicht für alle Stellmittel (1, 2, 3, 4, 5) ein Einschaltzeitpunkt festgelegt worden ist, das nächste Stellmittel (1, 2, 3, 4, 5) in der Reihenfolge ausgewählt wird.

7. Verfahren nach Anspruch 6, **dadurch gekennzeichnet, dass** nach der Auswahl des nächsten Stellmittels die Taktperiode in Bereiche geteilt wird, wobei in jedem Bereich entweder
- eine erste Summe konstant ist, wobei die erste Summe die Summe der Ordnungsgrößen (I₁, I₂, I₃, I₄, I₅) ist, die den in dem Bereich eingeschalteten Stellmitteln (1, 2, 3, 4, 5) zugeordnet sind, deren Einschaltzeitpunkte bereits festgelegt sind, oder
- nur ein Stellmittel (1, 2, 3, 4, 5), dessen Einschaltzeitpunkt bereits festgelegt ist, eingeschaltet ist oder mehrere Stellmittel (1, 2, 3, 4, 5), deren Einschaltzeitpunkte bereits festgelegt sind, nacheinander eingeschaltet sind, sofern die Ordnungsgrößen (I₁, I₂, I₃, I₄, I₅), die diesen Stellmitteln (1, 2, 3, 4, 5) zugeordnet sind, gleich sind, wobei für diesen Bereich die diesem Stellmittel (1, 2, 3, 4, 5) oder diesen Stellmitteln (1, 2, 3, 4, 5) zugeordnete Ordnungsgröße als erste Summe gilt, oder
- kein Stellmittel (1, 2, 3, 4, 5), dessen Einschaltzeitpunkt bereits festgelegt ist, eingeschaltet ist.

8. Verfahren nach Anspruch 7, **dadurch gekennzeichnet,**
- **dass** aus den Bereichen ein Bereich ausgewählt wird, wobei,
- falls ein Bereich vorhanden ist, in dem kein Stellmittel, dessen Einschaltzeitpunkt bereits festgelegt wurde, eingeschaltet ist, dieser Bereich ausgewählt wird, oder
- falls das nicht der Fall ist, von den Bereichen der Bereich ausgewählt wird, in dem die erste Summe am kleinsten ist,
- **dass** der ausgewählte Bereich als Zielbereich definiert wird und
- **dass** mit dem im Anspruch 8 angegebenen Verfahrensschritt fortgefahren wird.

9. Verfahren nach einem der Ansprüche 1 bis 8, **dadurch**
**gekennzeichnet, dass** die Quelle eine Quelle für elektrische Energie, insbesondere ein Außenleiter eines Einphasen- oder Mehrphasenwechselstromsystems ist und die Senken elektrische Lasten sind und der Bedarf jeder Senke ein Leistungsbedarf ist.

10. Vorrichtung zum Festlegen der Einschaltzeitpunkte einer Anzahl N parallel geschalteter Leistungssteller (1, 2, 3, 4, 5) mit einer Schwingungspaketsteuerung an einem Außenleiter eines Ein- oder Mehrphasenwechselstromsystems, wobei die Vorrichtung zumindest eine Schnittstelle zur Verbindung mit den Stellern (1, 2, 3, 4, 5) aufweist, und mit der Vorrichtung zumindest ein Signal zum Festlegen der Einschaltzeitpunkte der Steller erzeugbar ist, welches an der Schnittstelle bereitstellbar ist, **dadurch gekennzeichnet, dass** die Vorrichtung zum Festlegen der Einschaltzeitpunkte zur Durchführung des Verfahrens nach Anspruch 9 eingerichtet ist.

## Claims

1. Method for determining the switch-on points of a number N of actuating means connected in parallel, for example power controllers with an multicycle control, switches or valves (1, 2, 3, 4, 5), which are connected to a source (L1), wherein the actuating means (1, 2, 3, 4, 5) switch on a sink downstream of the actuating means (1, 2, 3, 4, 5) as required within a clock period with a clock period duration (T₀) in order to transmit an electric current corresponding to the demand of the sink during the switch-on time (T_{S,1}, T_{S,2}, T_{S,3}, T_{S,4}, T_{S,5}), wherein the actuating means (1, 2, 3, 4, 5) are brought into a sequence of ordinal values (I₁, I₂, I₃, I₄, I₅), wherein the ordinal value (I₁, I₂, I₃, I₄, I₅) is the magnitude of the effective current (Iₙ) relative to a network period (t₀), which is required by the actuating means during the switch-on time (T_{S,n}) in order to set a required load current, and wherein Iₙ is the effective value and T_{S,n} is the switch-on duration of an n-th actuating means of the actuators,
**characterised in that**
- the switch-on time points of the actuating means (1, 2, 3, 4, 5) are determined in this sequence,
- the switch-on time of the first actuating means (1, 2, 3, 4, 5) of the sequence is determined at the beginning of a clock period,
- in the event that a switch-on time still has to be defined for at least one further actuating means (1, 2, 3, 4, 5) the next actuating means (n) in the sequence is selected,
- if the switch-on time (T_{S,1}, T_{S,2}, T_{S,3}, T_{S,4}, T_{S,5} ) of the first actuating means (1, 2, 3, 4, 5) is shorter than the clock period duration (T₀), the clock period is divided into two ranges, namely into a range in which the first actuating means (1, 2, 3, 4, 5) is switched off and into a range in which the first actuating means (1, 2, 3, 4, 5) is switched on, wherein the range in which the first actuating means (1, 2, 3, 4, 5) is switched off is defined as the target range, or if the switch-on time (T_{S,1}, T_{S,2}, T_{S,3}, T_{S,4}, T_{S,5}) of the first actuating means is equal to the clock period duration (T₀), the clock period is defined as the target range,
- it is checked whether the switch-on time (T_{S,n}) of the selected actuating means (1, 2, 3, 4, 5) is shorter than or equal to the length of the target range (Z), and
- in the event that the switch-on time (T_{S,1}, T_{S,2}, T_{S,3}, T_{S,4}, T_{S,5}) of the selected actuating means (1, 2, 3, 4, 5) is greater than the length of the target range (Z), the target range (Z) is extended by an adjacent range.

2. Method according to claim 1, **characterised in that** in the event that the ordinal value (I₁, I₂, I₃, I₄, I₅) of two or more actuating means (1, 2, 3, 4, 5) is the same, the sequence is additionally determined by the switch-on time (T_{S,1}, T_{S,2}, T_{S,3}, T_{S,4}, T_{S,5}).

3. Method according to claim 1 or 2, **characterised in that** the sequence is descending.

4. Method according to any of claims 1 to 3, **characterised in that** in the event that the switch-on time (T_{S,1}, T_{S,2}, T_{S,3}, T_{S,4}, T_{S,5}) of the selected actuating means (1, 2, 3, 4, 5) is shorter than or equal to the length of the target range (Z), the switch-on time point of the selected actuating means (1, 2, 3, 4, 5) is determined.

5. Method according to any of claims 1 to 4, **characterised in that** after a recheck as to whether the switch-on time (T_{S,1}, T_{S,2}, T_{S,3}, T_{S,4}, T_{S,5}) of the selected actuating means (1, 2, 3, 4, 5) is shorter than or equal to the length of the target range (Z), depending on the result of the check the method steps are continued either according to claim 9 or according to claim 10.

6. Method according to claim 5, **characterised in that** after the switch-on time point of the selected actuating means (1, 2, 3, 4, 5) has been determined and in the event that a switch-on time point has not yet been determined for all actuating means (1, 2, 3, 4, 5), the next actuating means (1, 2, 3, 4, 5) in the sequence is selected.

7. Method according to claim 6, **characterised in that**, after selecting the next actuating means, the clock period is divided into ranges, wherein in each range either
- a first sum is constant, wherein the first sum is the sum of the ordinal values (I₁, I₂, I₃, I₄, I₅), which are assigned to the actuating means (1, 2, 3, 4, 5) which are switched on in the range, and whose switch-on time points are already determined, or
- only one actuating means (1, 2, 3, 4, 5), whose switch-on time point is already determined, is switched on or a plurality of actuating means (1, 2, 3, 4, 5), whose switch-on time points are already determined, are switched on in succession, provided that the ordinal values (I₁, I₂, I₃, I₄, I₅) which are assigned to these actuating means (1, 2, 3, 4, 5) are the same, wherein for this range the ordinal value assigned to this actuating means (1, 2, 3, 4, 5) or these actuating means (1, 2, 3, 4, 5) is used as a first sum, or
- no actuating means (1, 2, 3, 4, 5), whose switch-on time point is already determined, is switched on.

8. Method according to claim 7, **characterised in that**
- a range is selected from the ranges, wherein,
- if there is a range in which no actuating means is switched on, whose switch-on time point has already been determined, this range is selected, or
- if this is not the case, the range is selected from the ranges in which the first sum is the smallest,
- the selected range is defined as the target range and
- the method step defined in claim 8 is continued.

9. Method according to any of claims 1 to 8, **characterised in that** the source is a source of electrical energy, in particular an external conductor of a single-phase or multi-phase alternating current system, and the sinks are electrical loads and the demand of each sink is a power demand.

10. Device for determining the switch-on time points of a number N of parallel connected power controllers (1, 2, 3, 4, 5) with an oscillation packet control on an external conductor of a single-phase or multi-phase alternating current system, wherein the device has at least one interface for connecting to the controllers (1, 2, 3, 4, 5), and by the device at least one signal can be generated for determining the switch-on time points of the actuators, which can be provided at the interface, **characterised in that** the device for determining the switch-on time points is set up for performing the method according to claim 9.

## Revendications

1. Procédé pour déterminer les instants d'activation d'un nombre N de moyens d'actionnement connectés en parallèle, par exemple des contrôleurs de puissance avec une commande par paquets d'oscillations, des interrupteurs ou des vannes (1, 2, 3, 4, 5), qui sont connectés à une source (L1), dans lequel les moyens d'actionnement (1, 2, 3, 4, 5) activent, en fonction des besoins, une puits disposée en aval des moyens d'actionnement (1, 2, 3, 4, 5) à l'intérieur d'une période d'horloge avec la durée de période d'horloge (T₀) afin de transmettre, pendant le temps d'activation (T_{S,1}, T_{S,2}, T_{S,3}, T_{S,4}, T_{S},₅), un courant électrique correspondant à la demande de la puits, dans lequel les moyens d'actionnement (1, 2, 3, 4, 5) sont amenés dans un ordre d'une grandeur d'ordre (I₁, I₂, I₃, I₄, I₅), dans lequel la grandeur d'ordre (I₁, I₂, I₃, I₄, I₅) est la grandeur du courant effectif (Iₙ), se référant à une période de réseau (t₀), qui est requis par les moyens d'actionnement pendant le temps d'activation (T_{S,n}) afin de régler un courant de charge requis, et dans lequel Iₙ est la valeur effective et T_{S,n} la durée d'activation d'un n^{ième} moyen d'actionnement des moyens d'actionnement,
**caractérisé en ce que**
- la détermination des instants d'activation des moyens d'actionnement (1, 2, 3, 4, 5) a lieu dans cet ordre,
- l'instant d'activation du premier moyen d'actionnement (1, 2, 3, 4, 5) de l'ordre est déterminé au début d'une période d'horloge,
- dans le cas où un instant d'activation doit encore être défini pour au moins un autre moyen d'actionnement (1, 2, 3, 4, 5), le moyen d'actionnement suivant (n) dans l'ordre est sélectionné,
- **en ce que**, si le temps d'activation (T_{S,1}, T_{S,2}, T_{S,3}, T_{S,4}, T_{S,5}) du premier moyen d'actionnement (1, 2, 3, 4, 5) est inférieur à la durée de période d'horloge (T₀), la période d'horloge est divisée en deux plages, à savoir en une plage dans laquelle le premier moyen d'actionnement (1, 2, 3, 4, 5) est désactivé et en une plage dans laquelle le premier moyen d'actionnement (1, 2, 3, 4, 5) est activé, dans lequel la plage dans laquelle le premier moyen d'actionnement (1, 2, 3, 4, 5) est désactivé est définie comme plage cible, ou si le temps d'activation (T_{S,1}, T_{S,2}, T_{S,3}, T_{S,4}, T_{S,5}) du premier moyen d'actionnement est égal à la durée de la période d'horloge (T₀), la période d'horloge est définie comme plage cible,
- on vérifie si le temps d'activation (T_{S,n}) du moyen d'actionnement sélectionné (1, 2, 3, 4, 5) est inférieur ou égal à la longueur de la plage cible (Z), et
- dans le cas où le temps d'activation (T_{S,1}, T_{S,2}, T_{S,3}, T_{S,4}, T_{S,5}) du moyen d'actionnement sélectionné (1, 2, 3, 4, 5) est supérieur à la longueur de la plage cible (Z), la plage cible (Z) est élargie d'une plage adjacente.

2. Procédé selon la revendication 1, **caractérisé en ce que**, dans le cas où la grandeur d'ordre (I₁, I₂, I₃, I₄, I₅) de deux ou plusieurs moyens d'actionnement (1, 2, 3, 4, 5) est de même grandeur, l'ordre est déterminé en plus par le temps d'activation (T_{S,1}, T_{S,2}, T_{S,3}, T_{S,4}, T_{S,5}).

3. Procédé selon la revendication 1 ou 2, **caractérisé en ce que** l'ordre est décroissant.

4. Procédé selon l'une quelconque des revendications 1 à 3, **caractérisé en ce que**, dans le cas où le temps d'activation (T_{S1}, T_{S,2}, T_{S,3}, T_{S,4}, T_{S,5}) du moyen d'actionnement sélectionné (1, 2, 3, 4, 5) est inférieur ou égal à la longueur de la plage cible (Z), l'instant d'activation du moyen d'actionnement sélectionné (1, 2, 3, 4, 5) est déterminé.

5. Procédé selon l'une quelconque des revendications 1 à 4, **caractérisé en ce que**, après un nouveau test pour déterminer si le temps d'activation (T_{S,1}, T_{S,2}, T_{S,3}, T_{S,4}, T_{S,5}) du moyen d'actionnement sélectionné (1, 2, 3, 4, 5) est inférieur ou égal à la longueur de la plage cible (Z), en fonction du résultat du test, on poursuit soit selon l'étape de procédé indiquée à la revendication 9, soit selon l'étape de procédé indiquée à la revendication 10.

6. Procédé selon la revendication 5, **caractérisé en ce qu'**après la détermination de l'instant d'activation du moyen d'actionnement sélectionné (1, 2, 3, 4, 5) et dans le cas où un instant d'activation n'a pas encore été déterminé pour tous les moyens d'actionnement (1, 2, 3, 4, 5), le moyen d'actionnement suivant (1, 2, 3, 4, 5) dans l'ordre est sélectionné.

7. Procédé selon la revendication 6, **caractérisé en ce qu'**après la sélection du moyen d'actionnement suivant, la période d'horloge est divisée en plages, dans lequel, dans chaque plage, soit
- une première somme est constante, dans lequel la première somme est la somme des grandeurs d'ordre (I₁, I₂, I₃, I₄, I₅) qui sont affectées aux moyens d'actionnement (1, 2, 3, 4, 5) activés dans la plage, dont les instants d'activation sont déjà déterminés, soit
- un seul moyen d'actionnement (1, 2, 3, 4, 5) dont l'instant d'activation est déjà déterminé est activé ou plusieurs moyens d'actionnement (1, 2, 3, 4, 5) dont l'instant d'activation est déjà déterminé sont activés successivement, à condition que les grandeurs d'ordre (I₁, I₂, I₃, I₄, I₅) qui sont affectées à ces moyens d'actionnement (1, 2, 3, 4, 5) soient identiques, dans lequel, pour cette plage, la grandeur d'ordre affectée à ce moyen d'actionnement (1, 2, 3, 4, 5) ou à ces moyens d'actionnement (1, 2, 3, 4, 5) vaut comme première somme, soit
- aucun moyen de commande (1, 2, 3, 4, 5) dont l'instant d'activation est déjà déterminé n'est activé.

8. Procédé selon la revendication 7, **caractérisé en ce qu'**
- une plage est choisie parmi les plages, dans lequel,
- s'il existe une plage dans laquelle aucun moyen d'actionnement dont l'instant d'activation a déjà été déterminé n'est activé, cette plage est sélectionnée, ou
- si ce n'est pas le cas, la plage dans laquelle la première somme est la plus petite est sélectionnée parmi les plages,
- la plage sélectionnée est définie en tant que plage cible et
- **en ce que** l'étape de procédé indiquée dans la revendication 8 est poursuivie.

9. Procédé selon l'une quelconque des revendications 1 à 8, **caractérisé en ce que** la source est une source d'énergie électrique, en particulier un conducteur extérieur d'un système alternatif monophasé ou polyphasé et les puits sont des charges électriques et la demande de chaque puits est une demande de puissance.

10. Dispositif pour déterminer les instants d'activation d'un nombre N de moyens d'actionnement de puissance (1, 2, 3, 4, 5) montés en parallèle, avec une commande par paquets d'oscillations sur un conducteur extérieur d'un système de courant alternatif monophasé ou polyphasé, dans lequel le dispositif présente au moins une interface pour le raccordement aux dispositifs d'actionnement (1, 2, 3, 4, 5), et avec le dispositif, au moins un signal pour déterminer les instants d'activation des dispositifs d'actionnement peut être généré, lequel peut être mis à disposition sur l'interface, **caractérisé en ce que** le dispositif pour déterminer les instants d'activation est conçu pour la mise en œuvre du procédé selon la revendication 9.
